# EUROPÄISCHE PATENTANMELDUNG

(11) **EP 3 514 417 A1**
(43) Veröffentlichungstag der Anmeldung: **24.07.2019**
(21) Anmeldenummer: 18152841.5
(22) Anmeldetag: 22.01.2018
(51) Int. Cl.: F16K 3/08, F16K 3/34

(54) **VENTILANORDNUNG ZUR STEUERUNG EINER DURCHFLUSSMENGE**

(71) Anmelder: Arca Regler GmbH, 47918 Tönisvorst (DE)
(72) Erfinder: DAPPEN, Hans-Joachim, 47906 Kempen (DE)
(74) Vertreter: Paul & Albrecht Patentanwälte PartG mbB

(57) **Zusammenfassung**

Die Erfindung betrifft eine Ventilanordnung mit
einem Ventilgehäuse (1), das einen sich zwischen einer Einlassöffnung (2) und einer Auslassöffnung (3) erstreckenden Fluidkanal (4) aufweist, und
einer Steuereinrichtung (5), um eine Durchflussmenge eines den Fluidkanal (4) durchströmenden Fluides einzustellen,
wobei die Steuereinrichtung (5) umfasst
eine gehäusefeste Scheibe (6), welche den Fluidkanal (4) in einen einströmseitigen Fluidkanalabschnitt (7) und einen ausströmseitigen Fluidkanalabschnitt (8) unterteilt, und
eine relativ zu der gehäusefesten Scheibe (6) um eine Drehachse (X) verdrehbare Scheibe (11), welche mit einer Stirnseite flächig an einer Stirnseite der gehäusefesten Scheibe (6) anliegt,
wobei die Steuereinrichtung (5) einen Strömungskanal (14) definiert, dessen offener Strömungsquerschnitt durch Verdrehen der verdrehbaren Scheibe (11) veränderbar ist.

## Beschreibung

Die Erfindung betrifft eine Ventilanordnung mit einem Ventilgehäuse, das einen sich zwischen einer Einlassöffnung und einer Auslassöffnung erstreckenden Fluidkanal aufweist, und einer Steuereinrichtung, um eine Durchflussmenge eines den Fluidkanal durchströmenden Fluides einzustellen, wobei die Steuereinrichtung umfasst eine gehäusefeste Scheibe, welche den Fluidkanal in einen einströmseitigen und einen ausströmseitigen Fluidkanalabschnitt unterteilt, und eine relativ zu der gehäusefesten Scheibe um eine Drehachse verdrehbare Scheibe, welche mit einer Stirnseite flächig an einer Stirnseite der gehäusefesten Scheibe anliegt, wobei die Steuereinrichtung einen Strömungskanal definiert, der die Fluidkanalabschnitte verbindet und dessen offener Strömungsquerschnitt durch Verdrehen der verdrehbaren Scheibe veränderbar ist.

Ventilanordnungen zur Steuerung der Durchflussmenge eines Fluides sind in verschiedenen Ausführungen bekannt. So offenbart beispielsweise die DE 20 2005 011 844 U1 ein gattungsgemäßes Scheibenventil, welches ein mehrteiliges Ventilgehäuse mit einem sich zwischen einer Einlassöffnung und einer Auslassöffnung erstreckenden Fluidkanal aufweist. Das Scheibenventil umfasst ferner eine Steuereinrichtung zum Steuern der Durchflussmenge eines Fluides durch den Fluidkanal. Die Steuereinrichtung besitzt eine um eine Drehachse verdrehbare Scheibe, die flächig auf einem unteren Gehäuseteil aufliegt und den Fluidkanal in einen einströmseitigen und einen ausströmseitigen Fluidkanalabschnitt unterteilt. Die Steuereinrichtung definiert einen Strömungskanal, der sich aus einem einlassseitigen Strömungskanalabschnitt, einem auslassseitigen Strömungskanalabschnitt und einer die beiden Strömungskanalabschnitte verbindenden Verbindungsnut zusammensetzt.

Der einlassseitige Strömungskanalabschnitt ist dabei konzentrisch zur Drehachse der Scheibe im unteren Gehäuseteil ausgebildet, und der auslassseitige Strömungskanalabschnitt ist im unteren Gehäuseteil exzentrisch zur Drehachse ausgebildet. Die in der Scheibe ausgebildete Verbindungsnut stellt eine Verbindung zwischen dem mittig angeordneten einlassseitigen Strömungskanalabschnitt und dem exzentrisch angeordneten auslassseitigen Strömungskanalabschnitt her. Dazu besitzt die Verbindungsnut einen Nutbereich mit einem geradlinigen Verlauf, der von dem einlassseitigen Strömungskanalabschnitt ausgehend nach außen verläuft, und einen bogenförmigen Nutbereich mit der Drehachse als Mittelpunkt, der die Verbindung zum auslassseitigen Strömungskanalabschnitt herstellt. Im bogenförmigen Nutbereich der Verbindungsnut verändert sich die Nutbreite und/oder Nuttiefe über ihrer Länge.

Die Steuerung der Durchflussmenge erfolgt durch Verdrehen der Scheibe relativ zum unteren Gehäuseteil. Somit werden unterschiedliche Abschnitte des bogenförmigen Nutbereichs der Verbindungsnut mit dem auslassseitigen Strömungskanalabschnitt in Überdeckung gebracht und der hierdurch definierte offene Strömungsquerschnitt verändert.

Nachteilig an dieser Anordnung ist, dass sich bedingt durch den Verlauf der Verbindungsnut die Durchflussmenge nur sehr grob einstellen lässt. Eine feine Justierung der Durchflussmenge gerade bei kleinen Volumenströmen ist mit dieser Ventilanordnung schlecht möglich. Darüber hinaus sind die Einlass- und die Auslassöffnung an der gleichen Stirnfläche des Gehäuses ausgebildet, was zu einer entgegengesetzten Strömungsrichtung in beiden Öffnungen führt, wodurch ein Einbau in eine gerade verlaufende Rohrleitung ohne weitere die Fluidströmung umlenkende Teile nicht möglich ist.

Aufgabe der vorliegenden Erfindung ist es daher, eine Ventilanordnung bereit zu stellen, die in der Lage ist, auch sehr geringe Durchflussmengen mit hoher Genauigkeit zu steuern und die genannten Nachteile der vorbekannten Ventilanordnungen zu vermeiden.

Diese Aufgabe ist bei einer Ventilanordnung der eingangs genannten Art dadurch gelöst, dass der Strömungskanal einen die gehäusefeste Scheibe in Strömungsrichtung durchsetzenden und exzentrisch zur Drehachse angeordneten Strömungskanalabschnitt und einen die verdrehbare Scheibe in Strömungsrichtung durchsetzenden und exzentrisch zur Drehachse angeordneten Strömungskanalabschnitt umfasst, und dass der Strömungskanal eine Verbindungsnut aufweist, die in der zur verdrehbaren Scheibe weisenden Stirnseite der gehäusefesten Scheibe oder in der damit in Kontakt stehenden Stirnseite der verdrehbaren Scheibe ausgebildet ist und sich in der Stirnseite ausgehend von dem Strömungskanalabschnitt der Scheibe entlang eines Teiles des Umfangs der Scheibe auf der ringförmigen Fläche, die bei Verdrehen der Scheiben relativ zueinander von dem Strömungskanalabschnitt der anderen Scheibe überstrichen wird, erstreckt, so dass die Verbindungsnut eine Verbindung zwischen dem Strömungskanalabschnitt der gehäusefesten Scheibe und dem Strömungskanalabschnitt der verdrehbaren Scheibe bildet, wobei die Querschnittsfläche der Verbindungsnut von dem Strömungskanalabschnitt zum freien Ende hin abnimmt, und der durch die Überdeckung der Verbindungsnut mit dem Strömungskanalabschnitt der anderen Scheibe definierte offene Strömungsquerschnitt durch Verdrehen der verdrehbaren Scheibe veränderbar ist.

Erfindungsgemäß sind somit die beiden Strömungskanalabschnitte exzentrisch zur Drehachse angeordnet, und die Verbindungsnut erstreckt sich im Bereich der ringförmigen Fläche, die von dem Strömungskanalabschnitt der anderen Scheibe überstrichen wird. Durch diese Anordnung der Strömungskanalabschnitte wird sichergestellt, dass eine durchgehende Verbindung zwischen dem einströmseitigen Fluidkanalabschnitt und dem ausströmseitigen Fluidkanalabschnitt existiert. Die Einstellung der Durchflussmenge erfolgt dadurch, dass die Verbindungsnut, deren Querschnittsfläche sich über ihrer Länge verändert, in Überdeckung mit dem Strömungskanalabschnitt der anderen Scheibe gebracht wird. Je nachdem, mit welchem Abschnitt der Verbindungsnut sich der Strömungskanalabschnitt in Überdeckung befindet, ändert sich die in Überdeckung befindliche Querschnittsfläche der Verbindungsnut und somit der offene Strömungsquerschnitt des Strömungskanals. Dadurch kann die Durchflussmenge des Fluides eingestellt werden, da diese von dem offenen Strömungsquerschnitt abhängt.

Bevorzugt weisen die gehäusefeste Scheibe und/oder die verdrehbare Scheibe eine Kreisform auf. Die gehäusefeste Scheibe kann als eigenes Bauteil oder als Teilbereich des Ventilgehäuses ausgebildet sein.

Gemäß einer erfindungsgemäßen Ausführungsform ist vorgesehen, dass eine Stirnseite der gehäusefesten Scheibe zum einströmseitigen Fluidkanalabschnitt hin orientiert ist. Die andere Stirnseite der gehäusefesten Scheibe ist demgegenüber zum ausströmseitigen Fluidkanalabschnitt hin orientiert. Die Trennung zwischen ein- und ausströmseitigen Fluidkanalabschnitt verläuft somit quer zu dem die gehäusefeste Scheibe durchsetzenden Strömungskanalabschnitt. Dadurch wird erreicht, dass das Fluid von dem einströmseitigen Fluidkanalabschnitt aus in die Steuereinrichtung einströmt und auf der anderen Seite in den ausströmseitigen Fluidkanalabschnitt einmündet, so dass in der Steuereinrichtung keine vollständige Umkehrung der Strömungsrichtung stattfindet. Damit kann das Ventilgehäuse so gestaltet werden, dass die Einlass- und die Auslassöffnung im Ventilgehäuse einander gegenüberliegend angeordnet sind. Ein Einbau der erfindungsgemäßen Ventilanordnung in eine gerade Rohrleitung kann ohne weitere strömungsumlenkende Teile stattfinden.

Weiterhin ist gemäß einer Ausführungsform der Erfindung vorgesehen, dass die verdrehbare Scheibe, die drehfest mit einer im Ventilgehäuse drehbar gelagerten Steuerspindel verbunden sein kann, mittels eines Spannelements gegen die gehäusefeste Scheibe gedrückt wird. Zweckmäßiger Weise kann dies mittels einer Schraubendruckfeder erfolgen. Dadurch wird erreicht, dass auch bei unterschiedlichen Druckverhältnissen kein Spalt zwischen den miteinander in Kontakt stehenden Stirnflächen entstehen kann, so dass eine parallele Fluidströmung außerhalb der Verbindungsnut vermieden wird.

In einer weiteren Ausführungsform der Erfindung ist ein zwischen dem Gehäuse und der gehäusefesten Scheibe ausgebildeter Ringspalt mittels eines Dichtelements, vorzugsweise mittels eines Dichtringes abgedichtet.

In einer alternativen Ausgestaltung der Erfindung umfasst die Steuereinrichtung einen weiteren Strömungskanal mit einem die gehäusefeste Scheibe durchsetzenden Strömungskanalabschnitt, einem die verdrehbare Scheibe durchsetzenden Strömungskanalabschnitt und einer diese beiden Strömungskanalabschnitte verbindenden und auf einer der zueinander weisenden Stirnseiten der beiden Scheiben ausgebildeten Verbindungsnut, wobei die beiden die gehäusefeste Scheibe durchsetzenden Strömungskanalabschnitte, die beiden die verdrehbare Scheibe durchsetzenden Strömungskanalabschnitte und die Verbindungsnuten jeweils zueinander bezogen auf die Drehachse diametral gegenüberliegen. Dadurch wird die Durchflussmenge durch die Steuereinrichtung auf zwei Strömungskanäle verteilt, die in gleicher Weise die beiden Scheiben durchdringen und sich diametral gegenüberliegen, also um einen Winkel von 180° um die Drehachse versetzt sind. Prinzipiell wäre es auch denkbar, mehr als zwei Strömungskanäle vorzusehen, beispielsweise drei Strömungskanäle, deren Abschnitte dann jeweils um einen Winkel von 120° um die Drehachse versetzt sind.

In einer weiteren alternativen erfindungsgemäßen Ausgestaltung umfasst die Steuereinrichtung eine weitere Scheibe, die drehfest mit der gehäusefesten Scheibe verbunden und auf der dieser gegenüberliegenden Seite der verdrehbaren Scheibe positioniert ist, wobei die weitere Scheibe mit einer Stirnseite flächig an der verdrehbaren Scheibe anliegt, und der Strömungskanal einen Strömungskanalabschnitt, der die weitere Scheibe durchsetzt, und eine Verbindungsnut, die in der zur verdrehbaren Scheibe weisenden Stirnseite der der weiteren Scheibe oder in der damit in Kontakt stehenden Stirnseite der verdrehbaren Scheibe ausgebildet ist und sich in der Stirnseite ausgehend von dem Strömungskanalabschnitt der Scheibe entlang eines Teils des Umfangs der Scheibe auf der ringförmigen Fläche, die bei Verdrehen der Scheiben relativ zueinander von dem Strömungskanalabschnitt der anderen Scheibe überstrichen wird, erstreckt, so dass die Verbindungsnut eine Verbindung zwischen dem Strömungskanalabschnitt der verdrehbaren Scheibe und dem Strömungskanalabschnitt der weiteren Scheibe bildet, wobei die Querschnittsfläche der Verbindungsnut ausgehend von dem Strömungskanalabschnitt zum freien Ende hin abnimmt, aufweist.

In bevorzugter Ausgestaltung sind die gehäusefeste Scheibe und die weitere Scheibe durch einen Vierkantstab oder dergleichen drehfest verbunden, der von der gehäusefesten Scheibe in Richtung der weiteren Scheibe abragt, die verdrehbare Scheibe durchsetzt und in eine zu der Außenkontur des Vierkantstabs korrespondierende Durchgangsöffnung der weiteren Scheibe verschiebbar eingreift. Die weitere Scheibe kann durch ein elastisches Vorspannmittel, insbesondere eine Schraubendruckfeder, gegen die verdrehbare Scheibe gedrückt werden.

Die gehäusefeste Scheibe und die weitere Scheibe können durch einen Vierkantstab, beispielsweise einen solchen mit einem quadratischen Querschnitt, aber auch durch einen Stab mit einem anderen Profil, welches eine drehfeste Verbindung ermöglicht, miteinander verbunden sein. Das elastische Vorspannmittel kann sich direkt gegen das Ventilgehäuse oder gegen die axial im Ventilgehäuse fixierte Steuerspindel abstützen.

Bei einer weiteren Ausführungsform der Erfindung ist vorgesehen, dass die Querschnittsflächen der Strömungskanalabschnitte, die in an sich bekannter Weise einen kreisförmigen Querschnitt aufweisen können, weniger als 15% der Querschnittsfläche der Einlassöffnung betragen. Durch eine derartige Querschnittsverengung wird bereits eine Drosselwirkung erzielt, die eine Reduzierung der Durchflussmenge bewirkt. Darüber hinaus wird erreicht, dass sich eine gleichförmige Strömung in den Strömungskanalabschnitten bildet, was sich als vorteilhaft für die Güte der Steuerung erweist. Dabei können die Mittelpunkte der Strömungskanalabschnitte etwa auf einem Kreiszylinder um die Drehachse liegen.

Bevorzugt kann sich die Verbindungsnut in Form eines Bogens, insbesondere eines Kreisbogens um die Drehachse erstrecken. Ein Verlauf der Verbindungsnut in Form eines Kreisbogens um die Drehachse bietet den Vorteil, dass der sich mit der Verbindungsnut in Überlappung befindende Strömungskanalabschnitt in jeder Relativposition gleich zur Mitte der Verbindungsnut ausgerichtet ist. Alternativ kann die Verbindungsnut geradlinig verlaufen.

Dabei kann die Verbindungsnut einen V-förmigen Querschnitt aufweisen, andere Querschnittsformen sind jedoch auch möglich.

In einer weiteren Ausgestaltung der erfindungsgemäßen Ventilanordnung ist vorgesehen, dass die Tiefe und/oder Breite der Verbindungsnut ausgehend von dem Strömungskanalabschnitt zum freien Nutende hin abnimmt, insbesondere kontinuierlich und bevorzugt linear abnimmt. Auf diese Weise gestaltet sich die Einstellung der Durchflussmenge einfach.

Zweckmäßigerweise handelt es sich bei den miteinander in Kontakt stehenden Stirnseiten der Scheiben der Steuereinrichtung um geschliffene und/oder polierte Flächen. Dadurch ist es möglich, eine definierte Reibung zwischen den Scheiben zu erhalten und Nebenströmungen außerhalb der Verbindungsnut, die durch eine zu große Rauheit der Oberfläche entstehen können, zu vermeiden.

Darüber hinaus können die miteinander in Kontakt stehenden Stirnseiten der Scheiben gehärtet sein und/ oder eine Verschleißschutzbeschichtung aufweisen.

Ferner betrifft die Erfindung ein Verfahren zum Steuern der Durchflussmenge eines Fluides unter Verwendung einer erfindungsgemäßen Ventilanordnung, wobei die verdrehbare Scheibe relativ zur gehäusefesten Scheibe verdreht wird, um den durch die Überlappung der in der einen Scheibe ausgebildeten Verbindungsnut mit den Strömungskanalabschnitt der anderen Scheibe definierten offenen Strömungsquerschnitts zu verändern.

Hinsichtlich der Ausgestaltung der Erfindung wird auch auf die Unteransprüche sowie auf die nachfolgende Beschreibung eines Ausführungsbeispiels unter Bezugnahme auf die beiliegende Zeichnung verwiesen. In der Zeichnung zeigt:
- Figur 1: eine Ventilanordnung gemäß der vorliegenden Erfindung in einer Vollschnittansicht;
- Figur 2: die Steuereinrichtung der in Figur 1 dargestellten erfindungsgemäßen Ventilanordnung in der Detailschnittansicht A-A;
- Figur 3: die Steuereinrichtung einer alternativ ausgestalteten Ventilanordnung gemäß der vorliegenden Erfindung in einer Detailschnittansicht A-A;
- Figur 4: die Steuereinrichtung einer weiteren alternativ ausgestalteten Ventilanordnung gemäß der vorliegenden Erfindung in einer teilweisen Schnittansicht;
- Figur 5: die in Figur 4 dargestellte Steuereinrichtung in einer Schnittansicht B-B;
- Figur 6: die in Figur 4 und 5 dargestellte Steuereinrichtung in einer teilweisen Schnittansicht entlang der abgestuften Schnittebene C-C.

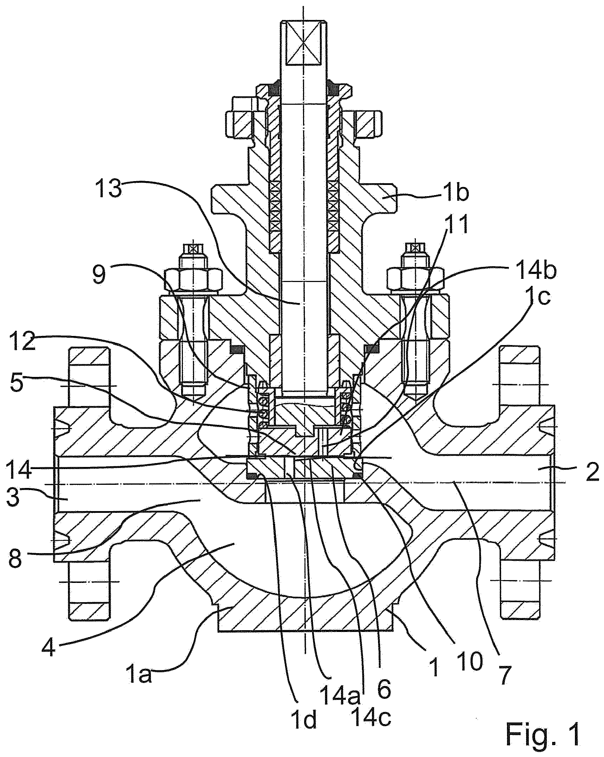

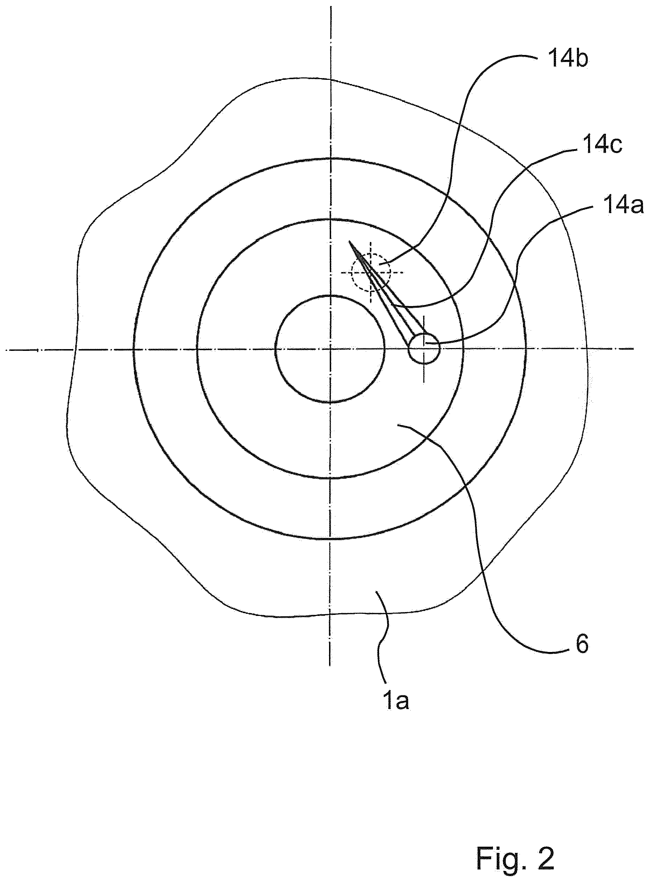

In den Figuren 1 und 2 ist eine erfindungsgemäße als Scheibenventil ausgebildete Ventilanordnung dargestellt. Die Ventilanordnung besitzt ein Ventilgehäuse 1, das einen sich zwischen einer Einlassöffnung 2 und einer Auslassöffnung 3 erstreckenden Fluidkanal 4 aufweist. Das Ventilgehäuse 1 ist zweiteilig ausgebildet und umfasst ein Gehäuseunterteil 1a und ein Gehäuseoberteil 1b zusammen, die über Verbindungsflansche miteinander verschraubt sind. Die Einlassöffnung 2 und die Auslassöffnung 3 sind auf gegenüberliegenden Seiten des Ventilgehäuses 1 ausgebildet, so dass die Fluidströmung im Wesentlichen in horizontaler Richtung verläuft. In der Mitte des Ventilgehäuses 1 befindet sich ein Teilbereich des Fluidkanals 4, der sich in vertikaler Richtung erstreckt.

Des Weiteren weist die Ventilanordnung eine Steuereinrichtung 5 auf, um eine Durchflussmenge eines den Fluidkanal 4 durchströmenden Fluides einzustellen. Die Steuereinrichtung 5 besitzt eine kreisförmige gehäusefeste Scheibe 6, die den Fluidkanal 4 in einen einströmseitigen Fluidkanalabschnitt 7 und einen ausströmseitigen Fluidkanalabschnitt 8 unterteilt, wobei die eine Stirnseite der gehäusefesten Scheibe 6 zum einströmseitigen Fluidkanalabschnitt 7 und die andere Stirnseite der gehäusefesten Scheibe 6 zum ausströmseitigen Fluidkanalabschnitt 8 hin orientiert sind. Dazu ist in dem Teilbereich des Fluidkanals 4, der sich in vertikaler Richtung erstreckt, die gehäusefeste Scheibe 6 in einer im unteren Gehäuseteil 1a ausgebildeten Ausnehmung 1c radial positioniert und liegt mit ihrer unteren Stirnseite auf einer horizontalen Auflagefläche 1d am Boden der Ausnehmung 1c. Mittels einer Druckhülse 9, die sich gegen das obere Gehäuseteil 1b stützt, wird die gehäusefeste Scheibe 6 in der Auflagefläche 1d fixiert und infolge einer durch die Verschraubung der beiden Gehäuseteile 1a, 1b miteinander aufgebrachten Vorspannung kraftschlüssig gegen ein unbeabsichtigtes Verdrehen gesichert. Der zwischen der gehäusefesten Scheibe 6 und dem unteren Gehäuseteil 1a vorhandene Ringspalt wird mittels eines Dichtrings 10 abgedichtet.

Des Weiteren umfasst die Steuereinrichtung 5 eine relativ zu der gehäusefesten Scheibe 6 um eine in vertikaler Richtung verlaufenden Drehachse X verdrehbare kreisförmige Scheibe 11, die mit ihrer unteren Stirnfläche flächig an der oberen Stirnfläche der gehäusefesten Scheibe 6 anliegt und mittels einer Schraubendruckfeder 12, die sich an dem Ventilgehäuse 1 abstützt, gegen die gehäusefeste Scheibe 6 gedrückt wird. Die miteinander in Kontakt stehenden Stirnflächen der beiden Scheiben 6, 11 können als geschliffene und/oder gehärtete und/oder mit einer Verschleißschutzbeschichtung versehene Oberflächen ausgebildet sein.

Die verdrehbare Scheibe 11 ist drehfest mit einer Steuerspindel 13 der Steuereinrichtung 5 verbunden, die um die Drehachse X drehbar in dem oberen Gehäuseteil 1b gelagert ist und manuell oder motorisch angetrieben werden kann.

Die Steuereinrichtung 5 definiert einen Strömungskanal 14, der die beiden Fluidkanalabschnitte 7, 8 verbindet. Dieser umfasst einen die gehäusefeste Scheibe 6 in Strömungsrichtung durchsetzenden Strömungskanalabschnitt 14a, sowie einen die verdrehbare Scheibe 11 in Strömungsrichtung durchsetzenden Strömungskanalabschnitt 14b. Die beiden Strömungskanalabschnitte 14a, 14b sind exzentrisch zur Drehachse X der verdrehbaren Scheibe 11 angeordnet und weisen in der dargestellten Ausführungsform einen kreisförmigen Querschnitt auf, dessen Querschnittsfläche etwa 3 % der Querschnittsfläche der Einlassöffnung 2 beträgt. Dabei liegen die Mittelpunkte der kreisförmigen Strömungskanalabschnitte 14a, 14b auf einem gemeinsamen Kreis um die Drehachse X.

Die gehäusefeste Scheibe 6 weist in ihrer mit der verdrehbaren Scheibe 10 in Kontakt stehenden Stirnfläche eine Verbindungsnut 14c auf, die ebenfalls einen Teil des Strömungskanals 14 bildet. Die Verbindungsnut 14c erstreckt sich ausgehend von dem Strömungskanalabschnitt 14a der gehäusefesten Scheibe 6 entlang eines Teils ihres Umfangs im Bereich einer ringförmigen Fläche, die bei Verdrehen der Scheiben 6, 11 relativ zueinander von dem Strömungskanalabschnitt 14b der verdrehbaren Scheibe 11 überstrichen wird. Dadurch kann über die Verbindungsnut 14c eine Verbindung zwischen den Strömungskanalabschnitten 14a, 14b der beiden Scheiben 6, 11 hergestellt werden.

Die Querschnittsfläche der Verbindungsnut 14c nimmt ausgehend von dem Strömungskanalabschnitt 14a der Scheibe 6 zum freien Ende hin ab. Konkret nehmen in dem Ausführungsbeispiel die Tiefe und die Breite der Verbindungsnut 14c ausgehend von dem Strömungskanalabschnitt 14a zum freien Nutende hin linear ab. Auf diese Weise wird beim Verdrehen der Scheibe 11 der offene Strömungsquerschnitt verändert, der durch die Überdeckung des Strömungskanalabschnitts 14b der verdrehbaren Scheibe 11 mit einem Teilabschnitt der Verbindungsnut 14c definiert ist. In der dargestellten Ausführungsform verläuft die Verbindungsnut 14c geradlinig und weist einen V-förmigen Querschnitt auf.

Die Durchflussmenge eines Fluides wird dadurch verändert, dass die verdrehbare Scheibe 11 relativ zur gehäusefesten Scheibe 6 verdreht wird. Dadurch wird der durch die Überlappung der in der gehäusefesten Scheibe 6 ausgebildeten Verbindungsnut 14c mit dem Strömungskanalabschnitt 14b der verdrehbaren Scheibe 11 definierte offene Strömungsquerschnitt verändert.

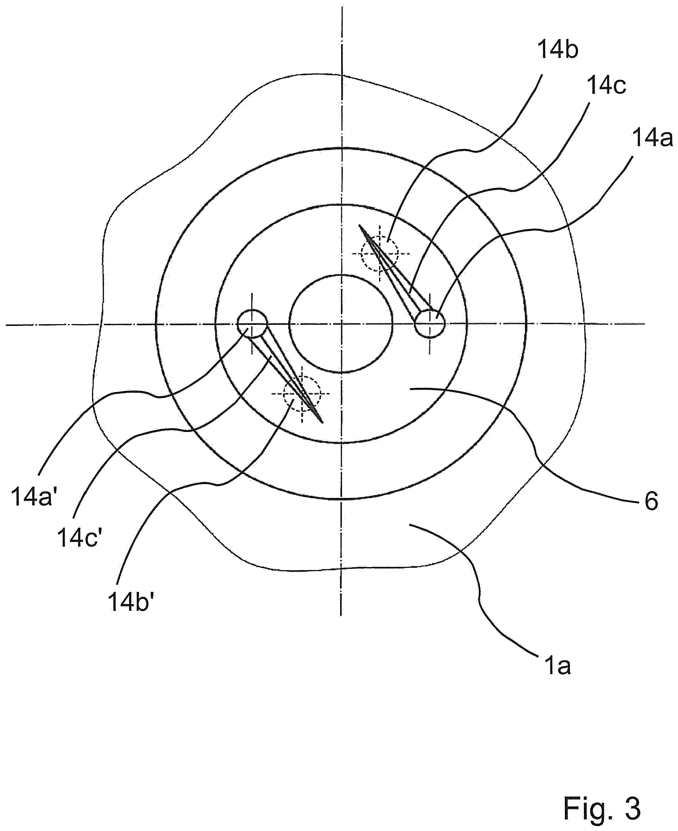

In Figur 3 ist die Steuereinrichtung einer alternativ ausgestalteten erfindungsgemäßen Ventilanordnung dargestellt. Diese unterscheidet sich von der in den Figuren 1 und 2 abgebildeten Ventilanordnung dadurch, dass die Steuereinrichtung 5 zwei Strömungskanäle 14, 14' definiert, die die beiden Fluidkanalabschnitte 7, 8 verbinden. Jeder dieser Strömungskanäle 14, 14' umfasst zwei die gehäusefeste Scheibe 6 in Strömungsrichtung durchsetzende Strömungskanalabschnitte 14a, 14a', sowie zwei die verdrehbare Scheibe 11 in Strömungsrichtung durchsetzende Strömungskanalabschnitte 14b, 14b'. Die Mittelpunkte der Strömungskanalabschnitte 14a, 14a', 14b, 14b' liegen auf einem gemeinsamen Kreis um die Drehachse X. Die beiden in der gehäusefesten Schiebe 6 ausgebildeten Strömungskanalabschnitte 14a und 14a' sind zueinander um einen Winkel von 180° versetzt auf dem gemeinsamen Kreis um die Drehachse X angeordnet. In gleicher Weise sind die beiden in der verdrehbaren Schreibe 11 ausgebildeten Strömungskanalabschnitte 14b, 14b' ebenfalls um einen Winkel von 180° versetzt auf dem gemeinsamen Kreis angeordnet. Die gehäusefeste Scheibe 6 weist in ihrer mit der verdrehbaren Scheibe 11 in Kontakt stehenden Stirnfläche zwei Verbindungnuten 14c, 14c' auf, die ebenfalls einen Teil der Strömungskanäle 14, 14' bildet. Die Verbindungsnuten 14c, 14c' erstrecken sich ausgehend von den Strömungskanalabschnitten 14a, 14a' der gehäusefesten Scheibe 6 entlang eines Teils ihres Umfangs im Bereich einer ringförmigen Fläche, die bei Verdrehen der Scheiben 6, 11 relativ zueinander von den Strömungskanalabschnitten 14b, 14b' der verdrehbaren Scheibe 11 überstrichen werden. Dadurch kann die Verbindungsnut 14c eine Verbindung zwischen den Strömungskanalabschnitten 14a und 14b und die Verbindungsnut 14c' eine Verbindung zwischen den Strömungskanalabschnitten 14a' und 14b' der beiden Scheiben 6,11 herstellen. Die Querschnittsfläche der Verbindungsnuten 14c, 14c' nimmt kontinuierlich von den Strömungskanalabschnitten 14a, 14a' zu ihren freien Enden hin ab.

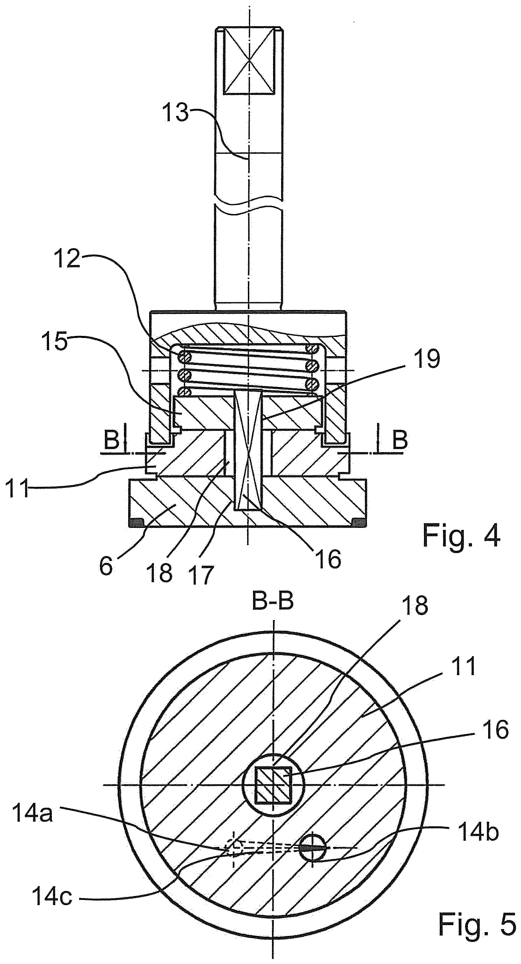

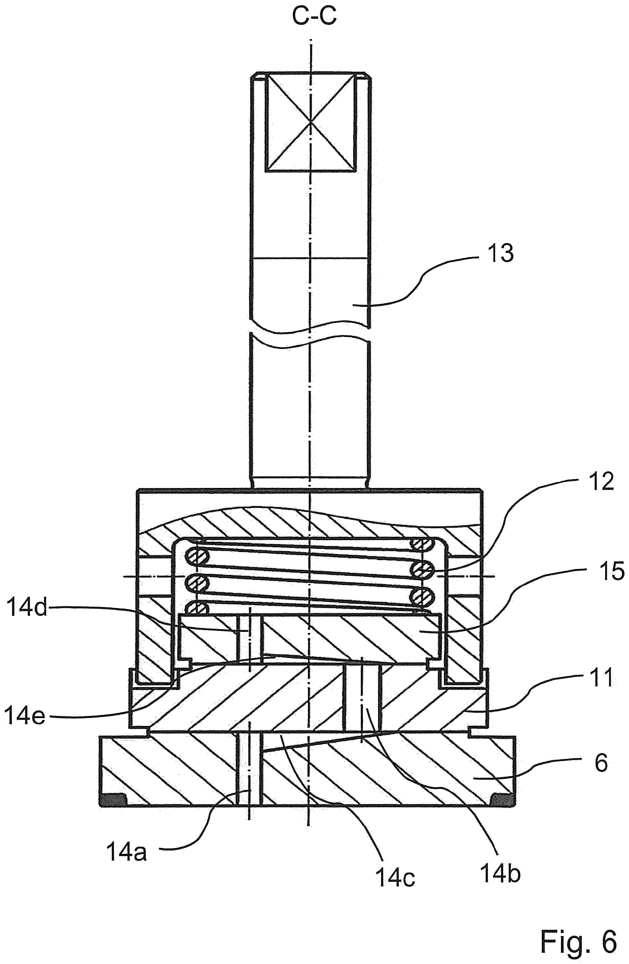

In den Figuren 4, 5 und 6 ist die Steuereinrichtung einer weiteren alternativ ausgebildeten erfindungsgemäßen Ventilanordnung dargestellt. Diese unterscheidet sich von den zuvor beschriebenen Ventilanordnungen dadurch, dass die Steuereinrichtung 5 weitere Scheibe 15 umfasst. Diese ist auf der der gehäusefesten Scheibe 6 gegenüberliegenden Seite der verdrehbaren Scheibe 11 positioniert und wird mittels einer Schraubendruckfeder 12 gegen die verdrehbare Scheibe 11 gedrückt.

Der Strömungskanal 14 weist einen die weitere Scheibe 15 durchsetzenden Strömungskanalabschnitt 14d und eine Verbindungsnut 14e auf, die in der zur verdrehbaren Scheibe 11 weisenden Stirnseite der weiteren Scheibe 15 ausgebildet ist. Die Verbindungsnut 14e erstreckt sich entlang eines Teils des Umfangs der weiteren Scheibe 15 und auf der ringförmigen Fläche, die bei Verdrehen der verdrehbaren Scheibe 11 relativ zur weiteren Scheibe 15 von dem Strömungskanalabschnitt 14b der verdrehbaren Scheibe 11 überstrichen wird. Dadurch bildet die Verbindungsnut 14e eine Verbindung zwischen dem Strömungskanalabschnitt 14b der verdrehbaren Scheibe 11 und dem Strömungskanalabschnitt 14d der weiteren Scheibe 15.

Durch einen Vierkantstab 16 sind die gehäusefeste Scheibe 6 und die weitere Scheibe 15 drehfest verbunden. Die gehäusefeste Schiebe weist ein Sackloch 17 auf. Der in dieses Sackloch 17 eingesetzte Vierkantstab 16 ragt von der gehäusefesten Scheibe 6 in Richtung der weiteren Scheibe 15 ab und durchsetzt die verdrehbare Scheibe 11, die eine Durchgangsbohrung 18 aufweist. Der Durchmesser der Durchgangsbohrung 18 ist dabei größer als die Länge der Diagonalen des Querschnitts des Vierkantstabs 16, der in eine zu seiner Außenkontur korrespondierende Durchgangsöffnung 19 der weiteren Scheibe 15 verschiebbar eingreift.

Die Scheibe 15 umfasst einen Strömungskanalabschnitt 14d und eine Verbindungsnut 14e, die in gleicher Weise mit dem Strömungskanalabschnitt 14b der beweglichen Scheibe 11 korrespondieren wie die Verbindungsnut 14c und der Strömungskanalabschnitt 14a der gehäusefesten Scheibe 6.

Die Durchflussmenge eines Fluides wird dadurch verändert, dass die mit der Steuerspindel 13 drehfest verbundene verdrehbare Scheibe 11 relativ zur gehäusefesten Scheibe 6 und zur Scheibe 15 verdreht wird. Dadurch wird sowohl der durch die Überlappung der in der gehäusefesten Scheibe 6 ausgebildeten Verbindungsnut 14c mit dem Strömungskanalabschnitt 14b der verdrehbaren Scheibe 11 definierte offene Strömungsquerschnitt, als auch der durch die Überlappung der in der weiteren Scheibe 15 ausgebildeten Verbindungsnut 14e mit dem Strömungskanalabschnitt 14b der verdrehbaren Scheibe 11 definierte offene Strömungsquerschnitt verändert.

### Bezugszeichenliste

- 1: Ventilgehäuse
- 1a: unteres Gehäuseteil
- 1b: oberes Gehäuseteil
- 1c: Ausnehmung
- 1d: Auflagefläche
- 2: Einlassöffnung
- 3: Auslassöffnung
- 4: Fluidkanal
- 5: Steuereinrichtung
- 6: gehäusefeste Scheibe
- 7: einströmseitiger Fluidkanalabschnitt
- 8: ausströmseitiger Fluidkanalabschnitt
- 9: Druckhülse
- 10: Dichtring
- 11: verdrehbare Scheibe
- 12: Schraubendruckfeder
- 13: Steuerspindel
- 14, 14': Strömungskanal
- 14a,14b, 14d, 14a', 14b', 14c, 14c', 14e: Strömungskanalabschnitt Verbindungsnut
- 15: weitere Scheibe
- 16: Vierkantstab
- 17: Sackloch
- 18: Durchgangsbohrung
- 19: Durchgangsöffnung

- X: Drehachse

## Patentansprüche

1. Ventilanordnung mit
einem Ventilgehäuse (1), das einen sich zwischen einer Einlassöffnung (2) und einer Auslassöffnung (3) erstreckenden Fluidkanal (4) aufweist, und
einer Steuereinrichtung (5), um eine Durchflussmenge eines den Fluidkanal (4) durchströmenden Fluides einzustellen,
wobei die Steuereinrichtung (5) umfasst
eine gehäusefeste Scheibe (6), welche den Fluidkanal (4) in einen einströmseitigen Fluidkanalabschnitt (7) und einen ausströmseitigen Fluidkanalabschnitt (8) unterteilt, und
eine relativ zu der gehäusefesten Scheibe (6) um eine Drehachse (X) verdrehbare Scheibe (11), welche mit einer Stirnseite flächig an einer Stirnseite der gehäusefesten Scheibe (6) anliegt,
wobei die Steuereinrichtung (5) mindestens einen, insbesondere genau einen Strömungskanal (14) definiert, der die Fluidkanalabschnitte (7, 8) verbindet und dessen offener Strömungsquerschnitt durch Verdrehen der verdrehbaren Scheibe (11) veränderbar ist,
**dadurch gekennzeichnet,**
**dass** der Strömungskanal (14) einen die gehäusefeste Scheibe (6) in Strömungsrichtung durchsetzenden und exzentrisch zur Drehachse (X) angeordneten Strömungskanalabschnitt (14a) und einen die verdrehbare Scheibe (11) in Strömungsrichtung durchsetzenden und exzentrisch zur Drehachse (X) angeordneten Strömungskanalabschnitt (14b) umfasst, und
**dass** der Strömungskanal (14) eine Verbindungsnut (14c) aufweist, die in der zur verdrehbaren Scheibe (11) weisenden Stirnseite der gehäusefesten Scheibe (6) oder in der damit in Kontakt stehenden Stirnseite der verdrehbaren Scheibe (11) ausgebildet ist und sich in der Stirnseite ausgehend von dem Strömungskanalabschnitt (14a) der Scheibe (6) entlang eines Teiles des Umfangs der Scheibe (6) auf der ringförmigen Fläche, die bei Verdrehen der Scheiben (6, 11) relativ zueinander von dem Strömungskanalabschnitt (14b) der anderen Scheibe (11) überstrichen wird, erstreckt, so dass die Verbindungsnut (14c) eine Verbindung zwischen dem Strömungskanalabschnitt (14a) der gehäusefesten Scheibe (6) und dem Strömungskanalabschnitt (14b) der verdrehbaren Scheibe (11) bildet,
wobei die Querschnittsfläche der Verbindungsnut (14c) ausgehend von dem Strömungskanalabschnitt (14a) zum freien Ende hin abnimmt, so dass der durch die Überdeckung der Verbindungsnut (14c) mit dem Strömungskanalabschnitt (14b) der anderen Scheibe (11) definierte offene Strömungsquerschnitt durch Verdrehen der verdrehbaren Scheibe (11) veränderbar ist.

2. Ventilanordnung nach Anspruch 1, **dadurch gekennzeichnet, dass** die gehäusefeste Scheibe (6) und/oder die verdrehbare Scheibe (11) kreisförmig ausgebildet sind.

3. Ventilanordnung nach einem der vorherigen Ansprüche, **dadurch gekennzeichnet, dass** eine Stirnseite der gehäusefesten Scheibe (6) zum einströmseitigen Fluidkanalabschnitt (7) und die andere Stirnseite der gehäusefesten Scheibe (6) zum ausströmseitigen Fluidkanalabschnitt (8) hin orientiert sind.

4. Ventilanordnung nach einem der vorherigen Ansprüche, **dadurch gekennzeichnet, dass** die verdrehbare Scheibe (11) mittels eines elastischen Vorspannmittels, vorzugsweise mittels einer Schraubendruckfeder (12), gegen die gehäusefeste Scheibe (6) gedrückt wird.

5. Ventilanordnung nach einem der vorherigen Ansprüche, **dadurch gekennzeichnet, dass** die verdrehbare Scheibe (11) drehfest mit einer Steuerspindel (13) der Steuereinrichtung (5) verbunden ist.

6. Ventilanordnung nach einem der vorherigen Ansprüche, **dadurch gekennzeichnet, dass** der zwischen dem Ventilgehäuse (1) und der gehäusefesten Scheibe (6) ausgebildete Ringspalt mittels eines Dichtelements, vorzugsweise eines Dichtrings (10) abgedichtet wird.

7. Ventilanordnung nach einem der vorherigen Ansprüche, **dadurch gekennzeichnet, dass** die Steuereinrichtung (5) einen weiteren Strömungskanal (14') umfasst mit einem die gehäusefeste Scheibe (6) durchsetzenden Strömungskanalabschnitt (14a'), einem die verdrehbare Scheibe (11) durchsetzenden Strömungskanalabschnitt (14b') und einer die Strömungskanalabschnitte (14a', 14b') verbindenden und sich auf einer der beiden zueinander weisenden Stirnseiten der beiden Scheiben (6, 11) ausgebildeten Verbindungsnut (14c'), wobei die beiden die gehäusefeste Scheibe (6) durchsetzenden Strömungskanalabschnitte (14a', 14a), die beiden die verdrehbare Scheibe (11) durchsetzenden Strömungskanalabschnitte (14b', 14b) und die Verbindungsnuten (14c', 14c) jeweils zueinander bezogen auf die Drehachse (X) diametral gegenüberliegen.

8. Ventilanordnung nach einem der Ansprüche 1 bis 6, **dadurch gekennzeichnet, dass** die Steuereinrichtung (5) eine weitere Scheibe (15) umfasst, die drehfest mit der gehäusefesten Scheibe (6) verbunden und auf der dieser gegenüberliegenden Seite der verdrehbaren Scheibe (11) positioniert ist, wobei die weitere Scheibe (15) mit einer Stirnseite flächig an der verdrehbaren Scheibe (11) anliegt, und dass der Strömungskanal (14) einen Strömungskanalabschnitt (14d), der die weitere Scheibe (15) durchsetzt, und eine Verbindungsnut (14e), die in der zur verdrehbaren Scheibe (11) weisenden Stirnseite der weiteren Scheibe (15) oder der damit in Kontakt stehenden Stirnseite der verdrehbaren Scheibe (11) ausgebildet ist und sich in der Stirnseite ausgehend von dem Strömungskanalabschnitt der Scheibe (15) entlang eines Teiles des Umfangs der Scheibe (15) auf der ringförmigen Fläche, die bei Verdrehen der Scheiben (11, 15) relativ zueinander von dem Strömungskanalabschnitt (14b) der anderen Scheibe (11) überstrichen wird, erstreckt, so dass die Verbindungsnut (14e) eine Verbindung zwischen dem Strömungskanalabschnitt (14b) der verdrehbaren Scheibe (11) und dem Strömungskanalabschnitt (14d) der weiteren Scheibe (15) bildet, wobei die Querschnittsfläche der Verbindungsnut (14e) ausgehend von dem Strömungskanalabschnitt zum freien Ende hin abnimmt, aufweist.

9. Ventilanordnung nach Anspruch 8, **dadurch gekennzeichnet, dass** die gehäusefeste Scheibe (6) und die weitere Scheibe (15) durch einen Vierkantstab (16) oder dergleichen drehfest verbunden sind, der von der gehäusefesten Scheibe (6) in Richtung der weiteren Scheibe (15) abragt, die verdrehbare Scheibe (11) durchsetzt und in eine zur der Außenkontur des Vierkantstabs (16) korrespondierende Durchgangsöffnung (19) der weiteren Scheibe (15) verschiebbar eingreift, und dass die weitere Scheibe (15) durch elastische Vorspannmittel, insbesondere eine Schraubendruckfeder (12), gegen die verdrehbare Scheibe (11) gedrückt wird.

10. Ventilanordnung nach einem der vorherigen Ansprüche, **dadurch gekennzeichnet, dass** die Strömungskanalabschnitte (14a, 14b, 14a', 14b', 14d) einen kreisförmigen Querschnitt aufweisen, wobei insbesondere die Mittelpunkte der Strömungskanalabschnitte (14a, 14b, 14a' , 14b' , 14d) auf einem Kreiszylinder um die Drehachse (X) liegen.

11. Ventilanordnung nach einem der vorherigen Ansprüche, **dadurch gekennzeichnet, dass** die Querschnittsflächen der Strömungskanalabschnitte (14a, 14b, 14a' , 14b' , 14d) jeweils weniger als 15% der Querschnittsfläche der Einlassöffnung (2) betragen.

12. Ventilanordnung nach einem der vorherigen Ansprüche, **dadurch gekennzeichnet, dass** die Verbindungsnut (14c, 14c' , 14e) geradlinig verläuft oder sich bogenförmig, insbesondere kreisbogenförmig um die Drehachse (X) erstreckt.

13. Ventilanordnung nach einem der vorherigen Ansprüche, **dadurch gekennzeichnet, dass** die Verbindungsnut (14c, 14c' , 14e) einen V-förmigen Querschnitt aufweist, und/ oder die Tiefe und/oder Breite der Verbindungsnut (14c, 14c' , 14e) ausgehend von dem Strömungskanalabschnitt zum freien Nutende hin abnimmt, insbesondere kontinuierlich und bevorzugt linear abnimmt.

14. Ventilanordnung nach einem der vorherigen Ansprüche, **dadurch gekennzeichnet, dass** es sich bei den miteinander in Kontakt stehenden Stirnseiten der Scheiben (6, 11, 15) der Steuereinrichtung um geschliffene und/oder polierte Oberflächen handelt und/oder die miteinander in Kontakt stehenden Stirnseiten der Scheiben (6, 11, 15) gehärtet sind und/ oder eine Verschleißschutzbeschichtung aufweisen.

15. Verfahren zum Steuern der Durchflussmenge eines Fluides unter Verwendung einer Ventilanordnung nach einem der vorherigen Ansprüche, **dadurch gekennzeichnet, dass** die verdrehbare Scheibe (11) relativ zur gehäusefesten Scheibe (6) verdreht wird, um den durch die Überlappung der in der einen Scheibe (6) ausgebildeten Verbindungsnut (14c) mit dem Strömungskanalabschnitt (14b) der anderen Scheibe (11) definierten offenen Strömungsquerschnitt zu verändern.
